# FASCICULE DE BREVET EUROPEEN

(11) **EP 2 651 729 B1**
(45) Date de publication et mention de la délivrance du brevet: **23.09.2015**
(21) Numéro de dépôt: 11782163.7
(22) Date de dépôt: 16.11.2011
(51) Int. Cl.: B60T 11/232, F16J 15/32, F16J 15/56, B60T 17/22, F15B 19/00

(54) **PROCÉDÉ DE DÉTECTION D'UNE ERREUR DE MONTAGE D'UN JOINT D'ÉTANCHÉITÉ DANS UN MAÎTRE-CYLINDRE**
VERFAHREN ZUR ERKENNUNG EINES FEHLERS BEI DER INSTALLATION EINER DICHTUNG BEI EINEM MASTERZYLINDER
METHOD FOR DETECTING AN ERROR IN THE INSTALLATION OF A SEAL IN A MASTER CYLINDER

(30) Priorité: 17.12.2010 FR 1004952
(43) Date de publication de la demande: 23.10.2013
(73) Titulaire: Robert Bosch GmbH, 70442 Stuttgart (DE)
(72) Inventeur: AUGUSTE, Antony, F-94350 Villier Sur Marne (FR); LHUILLIER, Laurent, F-93150 Le Blanc Mesnil (FR); QUINIOU, Nicolas, F-93250 Villemongle (FR); GRECH, Daniel, F-60260 Lamorlaye (FR); CHARPENTIER, Carole, F-95160 Montmorency (FR)
(86) Numéro de dépôt international: PCT/EP2011/070216
(87) Numéro de publication internationale: WO 2012/079900

(56) Documents cités:
- EP-A1- 1 767 423
- DE-A1- 4 425 403

## Description

### Domaine de l'invention

La présente invention concerne un procédé de détection d'une erreur de montage d'un joint d'étanchéité dans un maître-cylindre de système de freins de véhicules automobiles ayant un corps muni d'un alésage logeant au moins un piston actionné par le conducteur entre une position de repos et une position de freinage et rappelé élastiquement vers sa position de repos,
- l'alésage ayant au moins une chambre d'alimentation reliée au réservoir de liquide de frein,
- le piston séparant la chambre d'alimentation reliée au réservoir de liquide de frein et une chambre de pression reliée au circuit de freins,
- la chambre d'alimentation étant bordée par deux gorges recevant respectivement un joint de réalimentation séparant la chambre d'alimentation de la chambre de pression, un joint d'étanchéité séparant la chambre d'alimentation et l'extérieur, par rapport à la surface du piston, et
- le joint d'étanchéité est un joint périphérique à section en forme de U, couché, dont une branche est appliquée contre le fond et les deux parois adjacentes de la gorge, l'autre branche assurant l'étanchéité en s'appuyant sur le piston.

### Etat de la technique

Le document EP-A-1767423 divulgue le maître cylindre mentionné dans le préambule de la revendication 1.

Dans les maîtres-cylindres tels que définis ci-dessus, le joint d'étanchéité, également appelé joint d'isolation ou coupelle d'étanchéité, peut être monté retourné dans sa gorge ce qui n'apparaitra qu'au moment de l'utilisation des freins, représente un risque grave et nécessite le remplacement du maître-cylindre.

Dans le cas d'un maître-cylindre simple, il n'y a qu'une chambre d'alimentation bordée par le joint de réalimentation et le joint d'étanchéité, le premier étant placé derrière le second dans le sens de déplacement du piston du maître-cylindre sous l'effet d'une action sur la pédale de frein. Dans le cas d'un maître-cylindre tandem, il y a deux pistons fonctionnant de façon combinée et chaque piston coopère avec une chambre d'alimentation et une chambre de pression.

Le risque de montage retourné existe alors pour les deux joints d'étanchéité.

### But de l'invention

La présente invention a pour but de développer un procédé de détection d'un mauvais montage des joints du maître-cylindre de système de freins permettant de détecter le retournement ou le montage inversé.

### Exposé et avantages de l'invention

A cet effet, la présente invention concerne un procédé de détection pour un joint tel que défini ci-dessus caractérisé en ce qu' après l'assemblage du maître-cylindre, on soumet le joint dans le maître-cylindre à une pression de consigne et en cas de chute de pression, on considère que le joint est installé à l'envers dans le maître-cylindre.

Le procédé selon l'invention permet de détecter de manière très simple un défaut de montage d'un ou des deux joints d'étanchéité et cela en fin de chaîne de fabrication du maître-cylindre. Cette détection permet d'intervenir immédiatement sur le maître-cylindre pour installer le ou les joints d'étanchéité dans une position correcte.

Comme de préférence, le contrôle se fait avec de l'air comprimé comme fluide, le maître-cylindre ainsi contrôlé n'est pas souillé ni pour un éventuel changement de joint d'étanchéité, ni pour son emballage et son expédition vers le constructeur automobile.

Suivant une autre caractéristique avantageuse, on soumet le maître-cylindre et ainsi les joints d'étanchéité à une pression de l'ordre de 0,3 MPa-0,6 MPa. Cette pression est suffisante pour détecter un mauvais montage du ou des joints d'étanchéité et d'intervenir sur le maître-cylindre. De façon globale, le contrôle extrêmement simple du bon montage des joints d'étanchéité, éléments essentiels du bon fonctionnement d'un maître-cylindre, constitue un avantage considérable évitant la mise au rebut de maîtres-cylindres ou le remplacement de maîtres-cylindres sur des systèmes de freins avec tous les inconvénients que présente un tel remplacement lorsque le système de freins a déjà été activé.

### Dessins

La présente invention sera décrite ci-après de manière plus détaillée à l'aide des dessins annexés dans lesquels :
- la figure 1 est une vue en coupe axiale d'un maître-cylindre tandem,
- la figure 2 est une vue en perspective d'un joint,
- la figure 3 est une vue en coupe à échelle agrandie du joint placé dans une gorge du corps du maître-cylindre,
- la figure 4 est une vue à échelle agrandie montrant la forme de l'extrémité d'une branche en U du joint de la figure 2, et
- les figures 5A, 5B montrent le procédé de détection du joint d'étanchéité ou d'isolation dans la gorge.

### Description d'un mode de réalisation de l'invention

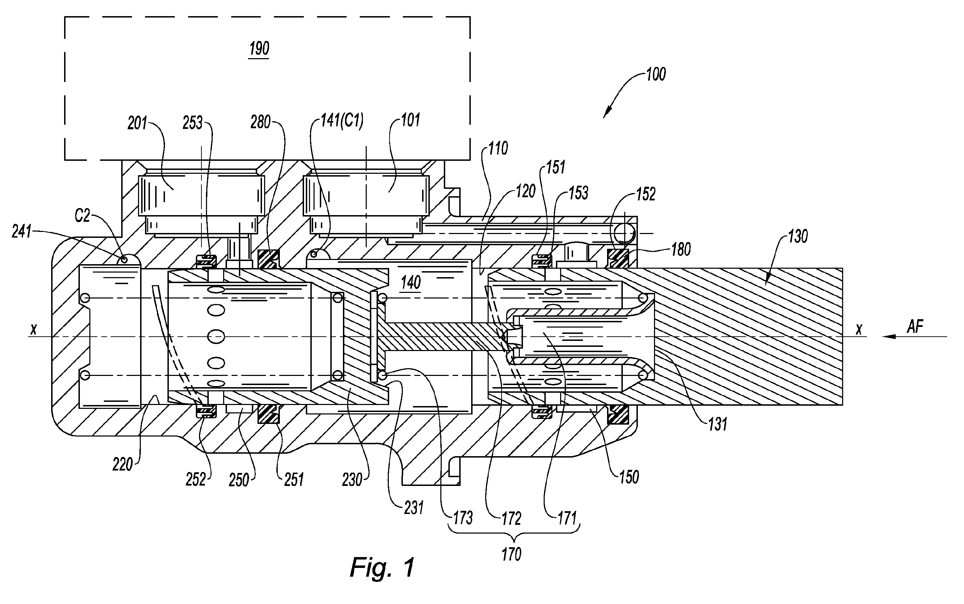

Selon la figure 1, l'invention concerne un procédé de détection d'une erreur de montage d'un joint d'étanchéité dans un maître-cylindre 100 d'un système de freins. L'exemple présenté est celui d'un maître-cylindre tandem.

Le maître-cylindre sera décrit ci-après pour une partie du maître-cylindre simple, sachant que cette description s'applique pratiquement de façon dédoublée à l'ensemble du maître-cylindre tandem pour tous les éléments qui constituent le dédoublement et permettent la commande de deux circuits de freins indépendants.

Le maître-cylindre 100 se compose d'un corps 110 traversé par un alésage 120 d'axe (xx) recevant un piston 130 commandé par un servofrein non représenté ou directement par l'action exercée par la pédale de frein.

Le sens de déplacement du piston 130 est indiqué par la flèche AF qui correspond à une action de freinage allant, selon la figure 1, de la droite vers la gauche.

Le dessus du maître-cylindre est muni de deux entrées 101, 201 destinées à recevoir les embouts de sortie du réservoir de liquide de frein simplement esquissé.

Le piston 130 formant tiroir délimite dans l'alésage 120 une chambre de pression 140 reliée au circuit de frein C1 par un perçage 141 débouchant dans la chambre 140. La chambre de pression 140 est séparée par le piston 130 creux, d'une chambre d'alimentation 150 réalisée dans le corps 110 du maître-cylindre 100 et entre son alésage 120 et la surface extérieure du piston 130, matérialisée par une gorge périphérique dans le corps du maître-cylindre. Du côté avant et du côté arrière, la chambre d'alimentation 150 est bordée d'une gorge périphérique 151, 152 débouchant dans l'alésage. La gorge avant 151 reçoit un joint périphérique de réalimentation 153 et la gorge arrière 152 un joint périphérique d'étanchéité 180 encore appelé joint d'isolation.

Le joint de réalimentation 153 permet l'alimentation en liquide de frein de la chambre de pression 140 en cas de manque de liquide de frein ou d'un actionnement brusque des freins lorsque la chambre d'alimentation 150 est encore fermée par le piston 130. Le mouvement d'ouverture et de fermeture du joint de réalimentation 153 est décrit dans le document FR 2 916 405. Le joint d'étanchéité 180 qui sépare la chambre d'alimentation 150 de l'extérieur du maître-cylindre 100 assure l'étanchéité entre l'alésage 120 et la surface du piston 130 quelles que soient les circonstances.

La description du maître-cylindre 100, donnée ci-dessus est aussi celle d'un maître-cylindre simple. Dans le cas du maître-cylindre tandem 100 représenté, il y a un dédoublement des moyens de mise en pression des deux circuits de freins C1, C2. Dans ce cas, la partie décrite ci-dessus est la partie primaire du maître-cylindre tandem et l'autre partie est la partie secondaire. La description donnée ci-dessus s'applique dans les mêmes conditions pour les autres éléments concernés par l'invention qui portent les mêmes références augmentées de 100.

Les deux pistons 130, 230 sont reliés par une tige télescopique 170 formée de deux parties 171, 172 maintenues écartées par un ressort 173 et s'appliquant par les deux extrémités, l'une contre le fond 131 du piston 130 et l'autre contre le dessus 231 du piston 230.

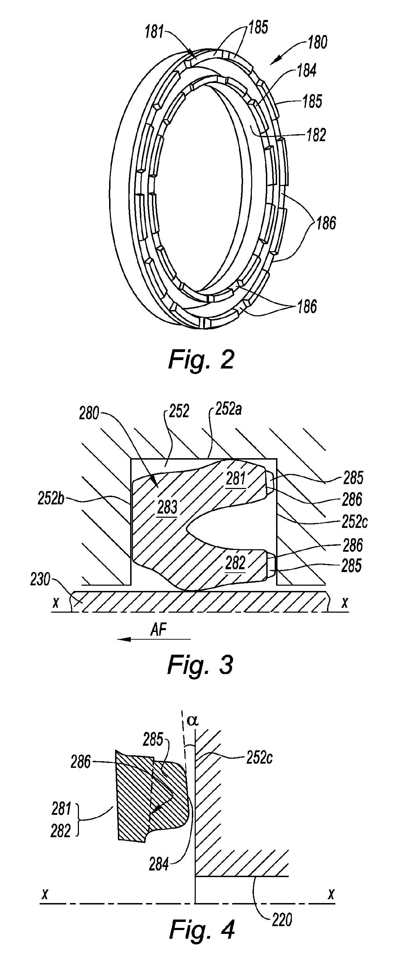

La figure 2 montre le joint d'étanchéité 180 à section en U dont les extrémités des branches 181, 182 sont munies de plots 185 répartis régulièrement sur la périphérie ce chaque branche, pour former un profil crénelé. Les faces 184 des plots 185 en saillie sont planes au sens déjà défini ci-dessus, c'est-à-dire contenues dans un plan perpendiculaire à l'axe xx de l'alésage ou faisant un léger angle avec ce plan et se présentant alors sous la forme d'une surface conique à angle au sommet très grand. Le fond en retrait entre les plots 185 porte la référence 186; il forme des passages entre les plots 185.

La figure 3 est une vue en coupe du joint d'étanchéité 280 logé dans sa gorge périphérique 252 et prenant appui contre le piston 230. Cette gorge 252 a une section rectangulaire avec un fond 252a et deux côtés 252b, 252c dirigés radialement par rapport à l'axe (xx). Le joint 280 a une section en forme de U couché à deux branches 281, 282. La branche extérieure 281 par rapport à l'axe (xx) du piston 230 vient au fond 252a de la gorge 252, et la branche intérieure 282 par rapport à l'axe xx, vient s'appuyer contre la surface extérieure du piston 230. Les deux branches 281, 282 sont réunies et forment une base 283 qui s'appuie contre le côté 252b situé dans le sens de poussée AF du piston 230

La surface plane de l'extrémité de l'une ou des deux branches du joint est dite plane par convention. Le côté de la gorge 252c est situé dans un plan perpendiculaire à l'axe xx et la surface dite plane de l'extrémité de l'une ou des deux branches s'aplatit contre ce côté 252c de la gorge. Cette surface peut être plane au sens strict, c'est-à-dire contenue dans un plan perpendiculaire à l'axe xx. Mais elle peut également être quasi-plane ou « inclinée » par rapport à un tel plan; elle correspond alors à une surface tronconique d'axe xx, avec un angle au sommet très grand ou son complément très petit, de l'ordre de 0-10°. La surface plane est réellement plane lorsque l'angle au sommet est égal à 180°.

La figure 4 montre le détail de la face avant 284 de l'une ou de chacune des branches 281, 282. La section de cette face avant 284 représentée en coupe axiale a une inclination d'un angle α par exemple de l'ordre de 10° par rapport au côté 252c de la gorge 252 contre lequel cette surface 284 s'applique.

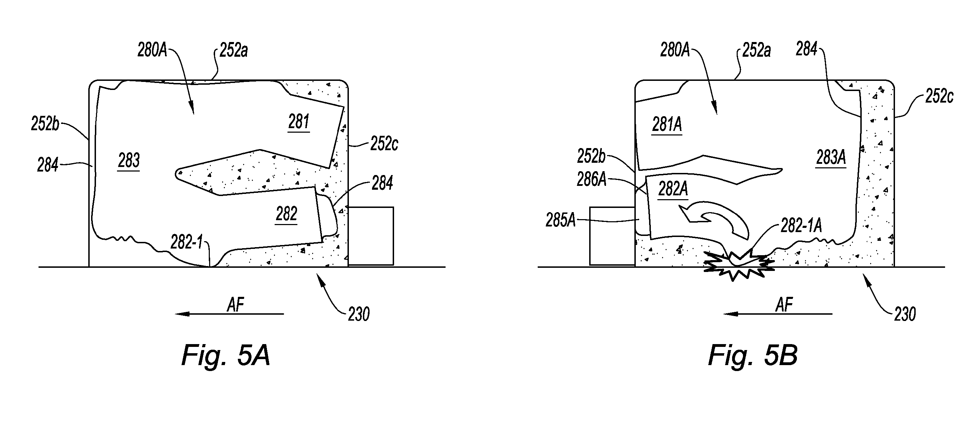

Le procédé de détection selon l'invention pour vérifier la bonne mise en place du ou des joints d'étanchéité 180, 280 sera décrite ci-après à l'aide des figures 5A, 5B.

Après assemblage du maître-cylindre, on contrôle le montage des joints d'étanchéité avant l'installation du maître-cylindre dans un système de freins en particulier en fin de chaîne de fabrication.

On soumet le maître-cylindre à une pression de consigne de l'ordre de 0,3 MPa-0,6 MPa, par de l'air comprimé. Si le joint 280 (selon cet exemple) est monté dans la position de la figure 5A, la pression déploie les branches 281, 282 et applique bien le bord inférieur 282-1 de la branche 282 contre le piston 230 et assure l'étanchéité. La pression de consigne ne chute pas.

Le maintien de la pression signifie que le joint 280 est monté correctement (figure 5A).

En revanche si le joint 280 est monté à l'envers comme dans le cas de la figure 5B, la pression est appliquée contre la face 284 de la base 283A, de sorte que le contact 282-1A se soulève du piston 130 et permet au fluide sous pression de s'échapper. La chute de pression est le signe de l'erreur de montage du joint. Dans cette position mal montée, le joint porte la référence 280A et tous les éléments du joint par ailleurs identiques au joint décrit précédemment, portent le suffixe A.

La détection de cette chute de pression permet de contrôler en fin de fabrication du maître-cylindre, si les joints sont montés correctement et cela avant que le maître-cylindre ne soit installé dans un circuit de frein.

Le contrôle se fait de préférence avec de l'air comprimé ou plus généralement un gaz de sorte que le maître-cylindre est sec et non souillé par du liquide hydraulique. Il n'a pas a être nettoyé avant réparation, emballage et expédition; il est facile de le démonter pour remonter le joint de façon correcte.

### NOMENCLATURE DES ELEMENTS PRINCIPAUX

- 100: Maître-cylindre
- 101, 201: Entrée
- 110: Corps du maître-cylindre 100
- 120, 220: Alésage
- 130, 230: Piston
- 140, 240: Chambre de pression
- 141, 241: Perçage
- 150, 250: Chambre d'alimentation
- 151, 152 ; 251, 252: Gorges
- 152a ; 252a: Fond
- 152b, 152c ; 252b, 252c: Parois
- 153 ; 253: Joint de réalimentation
- 170: Tige télescopique
- 171: Partie de la tige 170
- 172: Partie de la tige 170
- 173: Ressort
- 180, 180A ; 280, 280A: Joint d'étanchéité/d'isolation
- 181, 182, 181A, 182A ; 281, 282: Branches
- 183, 183A ; 283A: Base
- 184 ; 284: Face avant
- 185: Partie en saillie / plot
- 186: Fond en retrait
- 190: Réservoir

## Revendications

1. Procédé de détection d'une erreur de montage d'un joint d'étanchéité (180) d'un maître-cylindre (100) de système de freins de véhicules automobiles ayant un corps (110) muni d'un alésage (120) logeant au moins un piston (130) actionné par le conducteur entre une position de repos et une position de freinage et rappelé élastiquement vers sa position de repos,
l'alésage (120) ayant au moins une chambre d'alimentation (150) reliée au réservoir de liquide de frein (190),
- le piston (130) séparant la chambre d'alimentation (150) d'une chambre de pression (140) reliée aux circuits de frein,
- la chambre d'alimentation (150) étant bordée par deux gorges (151, 153) recevant respectivement, un joint de réalimentation (153) séparant la chambre d'alimentation (150) de la chambre de pression (140) et un joint d'étanchéité (180) séparant la chambre d'alimentation (150) de l'extérieur par rapport à la surface du piston (130),
- le joint d'étanchéité (180) est un joint périphérique à section en forme de U, couché, dont une branche (181) est appliquée contre le fond (152c) de la gorge (152) et ses deux parois adjacentes, (152a, b) l'autre branche (182) assurant l'étanchéité sur le piston (130),
**caractérisé en ce qu'**
après l'assemblage du maître-cylindre, on soumet le joint (180) dans le maître-cylindre à une pression de consigne et en cas de chute de pression, on considère que le joint est installé à l'envers dans le maître-cylindre (100).

2. Procédé selon la revendication 1,
**caractérisé en ce qu'**
on utilise de l'air comprimé comme fluide pour contrôler le montage des joints (180) du maître cylindre.

3. Procédé selon la revendication 1,
**caractérisé en ce qu'**
on soumet le maître-cylindre et ainsi les joints à une pression de l'ordre de 0,3 MPa-0,6 MPa.

## Patentansprüche

1. Verfahren zur Erkennung eines Fehlers bei der Installation einer Dichtung (180) eines Bremssystemhauptzylinders (100) von Kraftfahrzeugen mit einem Körper (110), der mit einer Bohrung (120) versehen ist, in der mindestens ein Kolben (130) untergebracht ist, der durch den Fahrer zwischen einer Ruhestellung und einer Bremsstellung betätigt wird und elastisch in seine Ruhestellung zurückgeholt wird, wobei die Bohrung (120) mindestens eine Füllkammer (150) aufweist, die mit dem Bremsflüssigkeitsbehälter (190) verbunden ist,
- wobei der Kolben (130) die Füllkammer (150) von einer mit den Bremskreisen verbundenen Druckkammer (140) trennt,
- wobei die Füllkammer (150) von zwei Nuten (151, 153) begrenzt wird, die eine Nachfülldichtung (153), die die Füllkammer (150) von der Druckkammer (140) trennt, bzw. eine Dichtung (180), die die Füllkammer (150) bezüglich der Kolbenfläche (130) von dem Äußeren trennt, aufnimmt,
- wobei die Dichtung (180) eine Umfangsdichtung mit einem Querschnitt in Form eines liegenden U ist, von der ein Schenkel (181) gegen den Grund (152c) der Nut (152) und ihre beiden benachbarten Wände (152a, b) gedrückt ist, wobei der andere Schenkel (182) die Dichtigkeit am Kolben (130) gewährleistet,
**dadurch gekennzeichnet, dass**
die Dichtung (180) in dem Hauptzylinder nach der Montage des Hauptzylinders mit einem Solldruck beaufschlagt wird und bei einem Druckabfall in Betracht gezogen wird, dass die Dichtung verkehrt herum in dem Hauptzylinder (100) eingebaut ist.

2. Verfahren nach Anspruch 1,
**dadurch gekennzeichnet, dass**
Druckluft als Fluid zum Überprüfen der Installation der Dichtungen (180) des Hauptzylinders verwendet wird.

3. Verfahren nach Anspruch 1,
**dadurch gekennzeichnet, dass**
der Hauptzylinder und somit die Dichtungen mit einem Druck von ca. 0,3 MPa - 0,6 MPa beaufschlagt werden.

## Claims

1. Method for detecting an error in the fitting of a seal (180) of a master cylinder (100) of an automotive vehicle braking system having a body (110) provided with a bore (120) housing at least one piston (130) actuated by the driver between a rest position and a braking position and returned elastically towards its rest position,
the bore (120) having at least one supply chamber (150) connected to the brake fluid reservoir (190),
- the piston (130) separating the supply chamber (150) from a pressure chamber (140) connected to the braking circuits,
- the supply chamber (150) being bordered by two grooves (151, 153) which respectively accommodate a resupply seal (153) separating the supply chamber (150) from the pressure chamber (140) and a seal (180) separating the supply chamber (150) from the outside with respect to the surface of the piston (130),
- the seal (180) is a peripheral seal with a cross section in the shape of a lying-down U, of which one branch (181) is pressed against the bottom (152c) of the groove (152) and the two adjacent walls (152a, b) thereof, the other branch (182) sealing against the piston (130),
**characterized in that**,
after the master cylinder has been assembled, the seal (180) in the master cylinder is subjected to a reference pressure and, in the event of pressure drop, the seal is considered to have been installed in the master cylinder (100) the wrong way around.

2. Method according to Claim 1, **characterized in that** compressed air is used as the fluid for checking the fitting of the seals (180) of the master cylinder.

3. Method according to Claim 1, **characterized in that** the master cylinder and also the seals are subjected to a pressure of the order of 0.3 MPa-0.6 MPa.
